# EUROPEAN PATENT SPECIFICATION

(11) **EP 4 393 587 B1**
(45) Date of publication and mention of the grant of the patent: **18.03.2026**
(21) Application number: 22878366.8
(22) Date of filing: 27.09.2022
(51) Int. Cl.: B01J 29/76, B01D 53/94, F01N 3/08, F01N 3/10, F01N 3/28, B01J 23/63, B01J 35/30, B01J 37/02, F01N 3/035, F01N 3/20, F01N 13/00

(54) **EXHAUST GAS PURIFICATION SYSTEM FOR GASOLINE ENGINE**
ABGASREINIGUNGSSYSTEM FÜR EINEN BENZINMOTOR
SYSTÈME DE PURIFICATION DE GAZ D'ÉCHAPPEMENT POUR MOTEUR À ESSENCE

(30) Priority: 04.10.2021 JP 2021163182
(43) Date of publication of application: 03.07.2024
(73) Proprietor: CATALER CORPORATION, Kakegawa-shi, Shizuoka 437-1492 (JP)
(72) Inventor: ONOHARA, Yu, Kakegawa-shi, Shizuoka 437-1492 (JP); OGAWA, Ryoichi, Kakegawa-shi, Shizuoka 437-1492 (JP); OHASHI, Tatsuya, Kakegawa-shi, Shizuoka 437-1492 (JP)
(74) Representative: Kramer Barske Schmidtchen Patentanwälte PartG mbB
(86) International application number: PCT/JP2022/035860
(87) International publication number: WO 2023/058496

(56) References cited:
- WO-A1-2005/044426
- WO-A1-2021/065577
- WO-A1-2021/065577
- JP-A- 2009 144 599
- JP-A- 2009 191 652
- US-A1- 2010 257 845
- US-A1- 2013 149 220
- US-A1- 2014 044 635
- US-A1- 2017 362 984

## Description

### [Technical Field]

The present invention relates to an exhaust gas purifying system for a gasoline engine. The present application claims priority based on Japanese Patent Application No. 2021-163182 filed on October 4, 2021.

### [Background Art]

The exhaust gas emitted from a gasoline engine of a vehicle or the like includes toxic substances such as hydrocarbon (HC), carbon monoxide (CO), and nitrogen oxide (NOx). For efficient reaction and removal of these toxic substances from the exhaust gas, exhaust gas purifying catalysts have been used conventionally.

Exhaust gas purifying systems for a gasoline engine, in which a start catalyst (S/C) and an underfloor catalyst (UF/C) are combined to further reduce the emission of NOx have been known (for example, see JP 2020-34001 A).

US 2014/0044635 A1, US 2013/0149220A1, US 2017/0362984 A1, and JP 2009-191652 A disclose further exhaust gas purifying systems.

### [Summary of Invention]

### [Technical Problem]

In recent years, exhaust gas regulations have become stricter and reduction of the NH₃ emission from gasoline engine vehicles has been demanded. NH₃ is a component that can be generated when NOx is over-reduced by an exhaust gas purifying catalyst. In the exhaust gas purifying systems in which the start catalyst (S/C) and the underfloor catalyst (UF/C) are combined, more NH₃ is emitted as the NOx purifying performance is higher. JP 2020-34001 A describes that the NH₃ purifying performance is improved by introducing a zeolite with NH₃ adsorbing capability into an exhaust gas purifying system for a gasoline engine.

However, through the present inventors' earnest examinations, a problem has been found out that, in the conventional exhaust gas purifying system for a gasoline engine including the zeolite with the NH₃ adsorbing capability, the NH₃ purifying performance deteriorates after duration.

The present invention has been made in view of the above circumstances, and an object is to provide an exhaust gas purifying system for a gasoline engine with high NH₃ purifying performance after duration.

### [Solution to Problem]

An exhaust gas purifying system for a gasoline engine disclosed herein is configured according to claim 1.

The present inventors have discovered the following when completing the exhaust gas purifying system for a gasoline engine disclosed herein. The exhaust gas purifying system for a gasoline engine is used in a high environmental temperature range, and the atmosphere varies between a rich atmosphere and a lean atmosphere. The oxygen concentration is low in a region with an air-fuel ratio in the rich to stoichiometric atmosphere; therefore, the structure of the zeolite with the NH₃ adsorbing capability deteriorates under high temperature and accordingly, the NH₃ purifying performance after duration decreases.

Thus, in the exhaust gas purifying system for a gasoline engine disclosed herein, the catalyst layer containing the OSC material is stacked on the NH₃ adsorption layer containing the zeolite. Therefore, even in the rich to stoichiometric region with the low oxygen concentration, oxygen can be supplied from the OSC material to the NH₃ adsorption layer and the structure deterioration of the zeolite can be suppressed. Accordingly, by the exhaust gas purifying system disclosed herein, the exhaust gas purifying system with the high NH₃ purifying performance after duration can be provided.

The NH₃ adsorption layer is stacked on a lower layer side relative to the catalyst layer in the second catalyst body. By such a structure, the exhaust gas purifying system with the higher NH₃ purifying performance after duration can be provided.

The zeolite is a CHA-type zeolite carrying Cu. By such a structure, the exhaust gas purifying system with the particularly high NH₃ purifying performance after duration can be provided.

The exhaust gas purifying system for a gasoline engine disclosed herein may have the following aspects.

A gasoline particulate filter is further provided between the upstream catalyst converter and the downstream catalyst converter in a flowing direction of exhaust gas in the exhaust path.

A gasoline particulate filter is further provided on a downstream side relative to the downstream catalyst converter in the flowing direction of exhaust gas in the exhaust path.

The first catalyst body of the upstream catalyst converter is a tandem type catalyst body including an upstream side catalyst body and a downstream side catalyst body. In this case, a gasoline particulate filter may be further provided between the upstream catalyst converter and the downstream catalyst converter or on a downstream side relative to the downstream catalyst converter. Alternatively, the downstream side catalyst body of the first catalyst body may have a function as a gasoline particulate filter.

The first catalyst body of the upstream catalyst converter has a function as a gasoline particulate filter.

In another aspect, an exhaust gas purifying catalyst body for a gasoline engine disclosed herein includes a base material, an NH₃ adsorption layer stacked on the base material, and a catalyst layer stacked on the NH₃ adsorption layer. The NH₃ adsorption layer contains a zeolite as an NH₃ adsorber, and an OSC material. The catalyst layer contains a catalyst precious metal and an OSC material. This exhaust gas purifying catalyst body for a gasoline engine is suitably used for the aforementioned exhaust gas purifying system for a gasoline engine. Here, the NH₃ adsorption layer may further contain a catalyst precious metal.

### [Brief Description of Drawings]

Fig. 1 is a schematic view of an exhaust gas purifying system according to a first embodiment.
Fig. 2 is a perspective view schematically illustrating a second catalyst body that is used in the exhaust gas purifying system according to the first embodiment.
Fig. 3 is a partial cross-sectional view of one example of the second catalyst body in Fig. 2 taken along a cylinder axis direction.
Fig. 4 is a partial cross-sectional view of another example of the second catalyst body in Fig. 2 taken along the cylinder axis direction (not in accordance with the invention).
Fig. 5 is a partial cross-sectional view of still another example of the second catalyst body in Fig. 2 taken along the cylinder axis direction.
Fig. 6 is a partial cross-sectional view schematically illustrating a laminated structure of a first catalyst body that is used in the exhaust gas purifying system according to the first embodiment.
Fig. 7 is a schematic view of an exhaust gas purifying system according to a second embodiment.
Fig. 8 is a schematic view of an exhaust gas purifying system according to a third embodiment.
Fig. 9 is a schematic view of an exhaust gas purifying system according to a fourth embodiment.
Fig. 10 is a schematic view of an exhaust gas purifying system according to a fifth embodiment.
Fig. 11 is a schematic view of an exhaust gas purifying system according to a sixth embodiment.
Fig. 12 is a schematic view of an exhaust gas purifying system according to a seventh embodiment.
Fig. 13 is a schematic view of an exhaust gas purifying system according to an eighth embodiment.
Fig. 14A to Fig. 14F are schematic views illustrating layer structures of the second catalyst bodies of the exhaust gas purifying systems according to Examples and Comparative Examples.
Fig. 15 is a graph expressing the NH₃ emission of the exhaust gas purifying systems according to Examples and Comparative Examples after duration.

### [Description of Embodiments]

Preferred embodiments of the present invention will be described below with reference to the drawings. Matters that are other than matters particularly mentioned in the present specification and that are necessary for the implementation of the present invention can be grasped as design matters of those skilled in the art based on the prior art in the relevant field. The present invention can be carried out based on the contents disclosed in this specification and technical common sense in the relevant field. In the drawings below, the members and parts with the same operation are denoted with the same reference sign and the overlapping description may be omitted or simplified. The size relation (length, width, thickness, and the like) in each drawing does not always reflect the actual size relation. In the present specification, the notation "A to B" (A and B are arbitrary numerals) for a range signifies a value more than or equal to A and less than or equal to B, and also encompasses the meaning of being "preferably more than A" and "preferably less than B".

### [First embodiment]

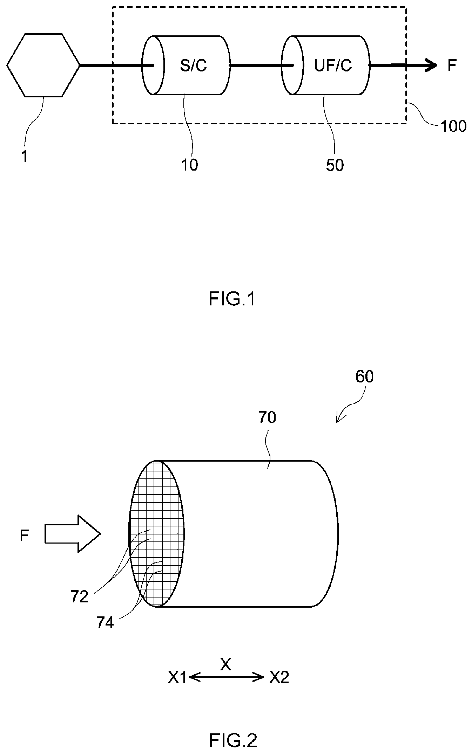

Fig. 1 is a schematic view of an exhaust gas purifying system 100 according to a first embodiment, which is one example of an exhaust gas purifying system disclosed herein. The exhaust gas purifying system 100 is configured to be disposed in an exhaust path of a gasoline engine 1, and is connected to the gasoline engine 1. An arrow F illustrated in Fig. 1 indicates a flowing direction of exhaust gas. The exhaust gas purifying system 100 includes an upstream catalyst converter 10 and a downstream catalyst converter 50. It should be note that the terms "upstream" and "downstream" of the catalyst converter indicate a positional relation in the flowing direction of the exhaust gas. Therefore, the downstream catalyst converter 50 is disposed on a downstream side relative to the upstream catalyst converter 10 in the flowing direction F of the exhaust gas in the exhaust path of the gasoline engine 1. In this specification, the term "gasoline engine" refers to an engine using gasoline as a fuel, in which mixed gas with an air-fuel ratio in the range of a rich region to a lean region including a theoretical air-fuel ratio (air:gasoline = 14.7:1) is combusted, and does not include a lean-bum engine.

The upstream catalyst converter 10 includes a first catalyst body and a first housing that accommodates the first catalyst body. The downstream catalyst converter 50 includes a second catalyst body and a second housing that accommodates the second catalyst body. The first catalyst body exists on the upstream side relative to the second catalyst body in the flowing direction F of the exhaust gas. The first catalyst body is typically, but not limited to, a startup catalyst (S/C). The second catalyst body exists on the downstream side relative to the first catalyst body 20 in the flowing direction F of the exhaust gas. The second catalyst body is typically, but not limited to, an underfloor catalyst (UF/C). The first housing and the second housing may have a structure that is the same as or similar to that of the housing used for the conventional startup catalyst and underfloor catalyst.

The first catalyst body and the second catalyst body will be described below in detail. The first catalyst body may have a structure that is the same as or similar to that of the conventionally known catalyst body. Accordingly, the second catalyst body is described first.

### <Second catalyst body>

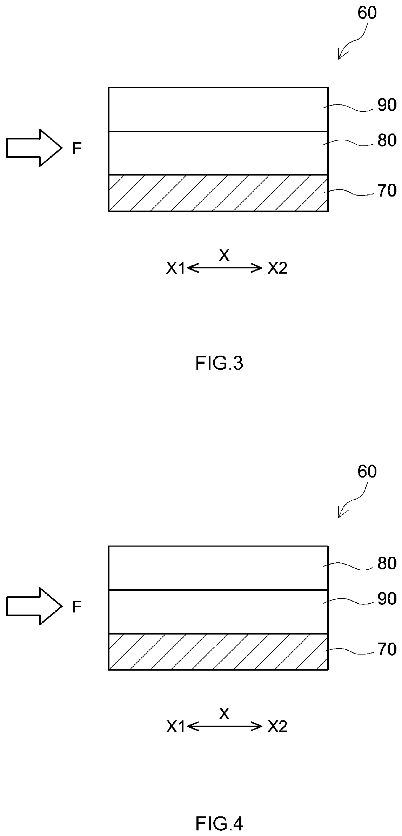

Examples of the structure of the second catalyst body are illustrated in Fig. 2 to Fig. 5. As illustrated in Figs. 3 to 5, a second catalyst body 60 has a structure in which an NH₃ adsorption layer 80 and a second catalyst layer 90 are stacked on a second base material 70. Thus, the second catalyst body 60 includes the second base material 70, the NH₃ adsorption layer 80, and the second catalyst layer 90.

The second base material 70 forms the frame of the second catalyst body 60. The second base material 70 is not particularly limited and various materials and various modes that have conventionally been employed in this type of applications can be used. The second base material 70 may be, for example, a ceramic carrier formed of ceramic such as cordierite, aluminum titanate, or silicon carbide, or a metal carrier formed of stainless steel (SUS), a Fe-Cr-Al-based alloy, a Ni-Cr-Al-based alloy, or the like. As illustrated in Fig. 2, the second base material 70 has a honeycomb structure here. The second base material 70 in the illustrated example is a straight-flow type base material, but may alternatively be a wall-follow type base material.

In the drawings, a direction X expresses a cylinder axis direction of the second base material 70, X1 expresses the upstream side in the flowing direction F of the exhaust gas, and X2 expresses the downstream side in the flowing direction of the exhaust gas. The second base material 70 includes a plurality of cells (cavities) 72 arrayed regularly in the cylinder axis direction X, and partition walls (ribs) 74 that section the plurality of cells 72. Although not particularly limited, the volume (the apparent volume including the capacity of the cells 72) of the second base material 70 may be generally 0.1 to 10 L, for example 0.5 to 5 L. In addition, an average length (overall length) L of the second base material 70 along the cylinder axis direction X may be generally 10 to 500 mm, for example 50 to 300 mm.

The cell 72 serves as a flow channel for the exhaust gas. The cell 72 extends in the cylinder axis direction X. The cell 72 is a through hole penetrating the second base material 70 in the cylinder axis direction X. The shape, the size, the number, and the like of the cells 72 may be designed in consideration of, for example, the flow rate, the component, and the like of the exhaust gas flowing in the second catalyst body 60. The shape of the cross section of the cell 72 that is orthogonal to the cylinder axis direction X is not limited in particular. The cross-sectional shape of the cell 72 may be, for example, a tetragon such as a square, a parallelogram, a rectangle, or a trapezoid, another polygon (such as a triangle, a hexagon, or an octagon), a wavy shape, a circular shape, or various other geometric shapes. The partition wall 74 faces the cell 72 and sections between the adjacent cells 72. Although not particularly limited, the average thickness of the partition wall 74 (the size in a direction orthogonal to the surface, this definition similarly applies to the description below) may be generally 0.1 to 10 mil (1 mil is equal to about 25.4 µm) and for example, 0.2 to 5 mil from the viewpoint of increasing the mechanical strength, the viewpoint of reducing the pressure loss, or the like. The partition wall 74 may be porous so that the exhaust gas can pass therethrough.

On this second base material 70, the NH₃ adsorption layer 80 and the second catalyst layer 90 are stacked. As illustrated in Fig. 3, in the second catalyst body 60, the NH₃ adsorption layer 80 exists below the second catalyst layer 90 (that is, on the second base material 70 side). In a non-inventive alternative illustrated in Fig. 4, the NH₃ adsorption layer 80 may exist above the second catalyst layer 90 (that is, on an exposed surface side of the second catalyst layer 90). As illustrated in Fig. 3, the NH₃ adsorption layer 80 is stacked on a lower layer side relative to the second catalyst layer 90. Since the second catalyst layer 90 exists on an upper layer side relative to the NH₃ adsorption layer 80, the oxygen-deficient atmosphere can be relieved more and the NH₃ purifying performance after duration becomes higher.

The NH₃ adsorption layer 80 contains a zeolite as an NH₃ adsorber. Therefore, the zeolite contained in the NH₃ adsorption layer 80 is a zeolite with NH₃ adsorbing capability. The zeolite carries transition metal.

The transition metal carried by the zeolite is

The zeolite forming a basic skeleton is typically aluminosilicate but may alternatively be silicoaluminophosphate (SAPO). The zeolite includes pores with the size suitable to adsorb NH₃. The zeolite used is a CHA-type zeolite. From the viewpoint of the NH₃ adsorbing capability a CHA-type zeolite carrying Cu is used as the zeolite.

In a case where the atmosphere variation of the exhaust gas is small, increasing the amount of the zeolite in the NH₃ adsorption layer 80 is advantageous in terms of the high NH₃ purifying performance after duration. Thus, the amount of the zeolite in the NH₃ adsorption layer 80 is 80 mass% or more.

The NH₃ adsorption layer 80 can contain a component other than the aforementioned components as an optional component. Examples of the optional component include an oxygen storage capacity material (so-called OSC material) capable of storing and releasing oxygen. As the OSC material, a known compound that has been known as having the oxygen storage capacity may be used, and specific examples thereof include a metal oxide (Ce-containing oxide) containing ceria (CeO₂). The Ce-containing oxide may be ceria or a composite oxide containing ceria and metal oxide other than ceria. From the viewpoints of improving the heat resistance and the durability, and the like, the Ce-containing oxide may be a composite oxide containing at least one of Zr and Al, for example, a ceria (CeO₂)-zirconia (ZrO₂) composite oxide (CZ composite oxide). From the viewpoints of improving the heat resistance and the like, for example, the CZ composite oxide may further include a rare earth metal oxide such as Nd₂O₃, La₂O₃, Y₂O₃, or Pr₆O₁₀.

In a case where the OSC material is the composite oxide containing cerium oxide, the content of cerium oxide is preferably 15 mass% or more and more preferably 20 mass% or more from the viewpoint of achieving the oxygen storage capacity sufficiently. On the other hand, if the content of cerium oxide is too high, the basicity of the OSC material may become too high. Therefore, the content of cerium oxide is preferably 60 mass% or less and more preferably 50 mass% or less.

The amount of the OSC material in the NH₃ adsorption layer 80 is limited by the amount of Cu-CHA zeolite.

Another example of the optional component of the NH₃ adsorption layer 80 is a catalyst precious metal. When the NH₃ adsorption layer 80 contains the catalyst precious metal, the NH₃ adsorption layer 80 can also purify the exhaust gas.

Examples of the catalyst precious metal include: platinum group elements such as rhodium (Rh), palladium (Pd), platinum (Pt), ruthenium (Ru), osmium (Os), and iridium (Ir); gold (Au); and silver (Ag). These can be used alone, or two or more kinds thereof may be used in combination. In particular, from the viewpoint of the catalyst performance, at least one kind selected from the group consisting of Pt, Rh, Pd, Ir, and Ru is preferable and at least one kind selected from the group consisting of Pt, Rh, and Pd is more preferable. In a case of using two or more kinds of these, the catalyst precious metal may be an alloy of the two or more kinds of metal species.

The catalyst precious metal may be carried by the aforementioned OSC material, or carried by a non-OSC material (for example, alumina (Al₂O₃), titania (TiO₂), zirconia (ZrO₂), silica (SiO₂), or the like).

As a still another example of the optional component of the NH₃ adsorption layer 80, a binder such as alumina sol and silica sol, various kinds of additives, and the like are given.

The coat amount (that is, forming amount) of the NH₃ adsorption layer 80 is not limited in particular. The coat amount is 10 to 200 g/L for example, and may be 100 to 200 g/L per liter of the volume of a part of the base material where the NH₃ adsorption layer 80 is formed along the cylinder axis direction X. By satisfying the above range, both the improvement of the purifying performance for the toxic substances and the reduction of the pressure loss can be achieved at a high level. Moreover, the durability and the peeling resistance can be improved.

The thickness of the NH₃ adsorption layer 80 is not limited in particular and may be designed as appropriate in consideration of the durability, the peeling resistance, and the like. The thickness of the NH₃ adsorption layer 80 is 1 to 100 µm for example, and may be 5 to 100 µm.

The coat width (an average dimension in the cylinder axis direction X) of the NH₃ adsorption layer 80 is not limited in particular and may be designed as appropriate in consideration of the size of the second base material 70, the flow rate of the exhaust gas flowing in the second catalyst body 60, and the like. The coat width is for example 10% to 100%, preferably 20% to 100%, and more preferably 30% to 100% of the overall length of the base material in the cylinder axis direction X.

The second catalyst layer 90 contains a catalyst precious metal. The catalyst precious metal is normally carried by a carrier, and thus, the second catalyst layer 90 normally includes a three-way catalyst. The second catalyst layer 90 can be configured similarly to a known catalyst layer including the three-way catalyst.

The catalyst precious metal is a catalyst metal component that purifies the toxic substances in the exhaust gas. Examples of the catalyst precious metal include ones exemplified as the catalyst precious metal that is used for the NH₃ adsorption layer 80. One kind of the catalyst precious metal may be used alone, but it is preferable to use two or more kinds thereof in combination. As the catalyst precious metal, from the viewpoint of the catalyst performance, at least two kinds selected from the group consisting of Pt, Rh, Pd, Ir, and Ru are preferable, and a combination of Rh, which has high reduction activity, and Pd and/or Pt, which have high oxidation activity, is more preferable.

The catalyst precious metal is preferably used as microparticles with sufficiently small particle diameter. The average particle diameter of the catalyst precious metal particles (specifically, average value of particle diameters of 20 or more precious metal particles obtained based on a cross-sectional image of the catalyst layer by a transmission electron microscope) is generally about 1 to 15 nm, preferably 10 nm or less, more preferably 7 nm or less, and still more preferably 5 nm or less. Thereby, the contact area of the catalyst precious metal with the exhaust gas can be increased and the purifying performance can be improved further.

The amount of the catalyst precious metal in the second catalyst body 60 (the total amount of the catalyst precious metal in the NH₃ adsorption layer 80 and the second catalyst layer 90) is not limited in particular and can be determined as appropriate depending on the kind of catalyst precious metal or the like. The amount of the catalyst precious metal per liter of the volume of the second base material 70 may be, for example, 0.01 g/L or more, 0.03 g/L or more, 0.05 g/L or more, 0.08 g/L or more, or 0.10 g/L or more from the viewpoint of the particularly high exhaust gas purifying performance. From the viewpoint of making the exhaust gas purifying performance and the cost balanced, this amount may be, for example, 5.00 g/L or less, 3.00 g/L or less, 2.00 g/L or less, 1.50 g/L or less, 1.00 g/L or less, 0.80 g/L or less, or 0.50 g/L or less.

It should be noted that in the present specification, "per liter of the volume of the base material" refers to per liter of the entire bulk volume including the capacity of cell paths in addition to the pure volume of the base material. The amount described as (g/L) in the following description represents the amount included in a liter of the volume of the base material.

The second catalyst layer 90 contains the OSC material. Examples of the OSC material contained in the second catalyst layer 90 include ones exemplified as the OSC material that can be used for the NH₃ adsorption layer 80.

The OSC material may or may not carry the catalyst precious metal. Some OSC materials may carry the catalyst precious metal while the other OSC materials may not carry the catalyst precious metal.

The second catalyst layer 90 may further include the non-OSC material (that is, material incapable of storing and releasing oxygen), and the catalyst precious metal may be carried by the non-OSC material. Examples of the non-OSC material include alumina (Al₂O₃), titania (TiO₂), zirconia (ZrO₂), silica (SiO₂), and the like.

Therefore, in the second catalyst layer 90, usually, one of or both the OSC material and the non-OSC material are used as the carrier. The carrier preferably has a large specific surface area, and thus, porous carrier particles are used suitably. The carrier particle has a specific surface area, which is obtained based on a BET method, of preferably 50 to 500 m²/g (particularly, 200 to 400 m²/g) from the viewpoints of the heat resistance and the structure stability. Moreover, the average particle diameter of the carrier particles (specifically, average value of particle diameters of 20 or more carrier particles obtained based on a cross-sectional image of the catalyst layer by a transmission electron microscope) is preferably 1 nm or more and 500 nm or less (particularly, 10 nm or more and 200 nm or less).

The amount of the OSC material in the second catalyst layer 90 is for example 10 mass% or more, preferably 30 mass% or more, and more preferably 40 mass% or more. On the other hand, the amount of the OSC material in the second catalyst layer 90 is for example less than 90 mass%, preferably less than 60 mass%, and more preferably 50 mass% or less.

The amount of the non-OSC material in the second catalyst layer 90 is for example 10 mass% or more, preferably 30 mass% or more, and more preferably 40 mass% or more. On the other hand, the amount of the non-OSC material in the second catalyst layer 90 is for example less than 90 mass%, preferably less than 70 mass%, and more preferably less than 60 mass%.

The second catalyst layer 90 may further include a component other than the aforementioned components. For example, the second catalyst layer 90 may include a metal species such as an alkali metal element, an alkaline earth metal element, a transition metal element, or a rare-earth element. These elements (particularly, alkaline earth element) may be contained as an oxide, a hydroxide, a carbonate, a nitrate, a sulfate, a phosphate, an acetate, a formate, an oxalate, a halide, or the like. In the second catalyst layer 90, it is preferable that the alkaline earth metal element (in particular, Ba), and Pt and/or Pd coexist.

As other optional components of the second catalyst layer 90, a binder such as alumina sol and silica sol, a NOx adsorber with NOx absorbing capability, various kinds of additives such as a stabilizer, and the like are given.

The second catalyst layer 90 may have either a single layer structure or a multilayer structure. In examples illustrated in Fig. 3 and Fig. 4, the second catalyst layer 90 is a single layer. When the second catalyst layer 90 has the single layer structure, the second catalyst layer 90 may include a plurality of regions having different compositions, properties, or the like. In another example, the second catalyst layer 90 may include a front part that is positioned on the upstream side X1 in the cylinder axis direction X, and a rear part that is positioned on the downstream side X2 relative to the front part, and the compositions and/or properties may be different between the front part and the rear part. Specifically, for example, the front part and the rear part may contain different catalyst precious metals.

When the second catalyst layer 90 has the multilayer structure, the number of layers is not limited in particular. The second catalyst layer 90 may have a two-layer structure including a layer on the base material side (lower layer) and a layer on a surface side (upper layer), or may have a structure of three or more layers including the layer on the base material side (lower layer), the layer on the surface side (upper layer), and one or more intermediate layers existing therebetween. In this multilayer structure, the respective layers may contain different catalyst precious metals.

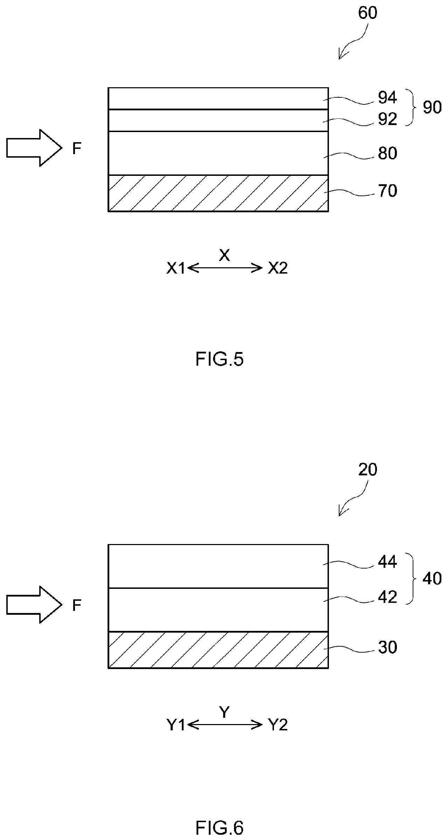

Fig. 5 illustrates an example in the case where the second catalyst layer 90 has the multilayer structure. In Fig. 5, the NH₃ adsorption layer 80 is provided on the second base material 70 and the second catalyst layer 90 is provided on the NH₃ adsorption layer 80.

The second catalyst layer 90 includes a lower layer part 92 corresponding to the layer on the base material side, and an upper layer part 94 provided on the lower layer part 92. In the illustrated example, the upper layer part 94 is also the layer on the exposed surface side of the second catalyst layer 90. Each of the lower layer part 92 and the upper layer part 94 of the second catalyst layer 90 contains the catalyst precious metal. The lower layer part 92 contains Pd as the catalyst precious metal. On the other hand, the upper layer part 94 contains Rh as the catalyst precious metal. In this case, by carrying an oxidizing catalyst and a reducing catalyst with these catalysts separated from each other in a stacking direction, the deterioration of the catalyst precious metal (for example, sintering due to grain growth) can be suppressed, so that the durability of the second catalyst body 60 can be improved further.

The coat amount (that is, forming amount) of the second catalyst layer 90 is not limited in particular. The coat amount is 10 to 500 g/L for example, and may be 100 to 200 g/L per liter of the volume of a part of the base material where the catalyst layer 20 is formed along the cylinder axis direction X. By satisfying the above range, both the improvement of the purifying performance for the toxic substances and the reduction of the pressure loss can be achieved at a high level. Moreover, the durability and the peeling resistance can be improved.

The thickness of the second catalyst layer 90 is not limited in particular and may be designed as appropriate in consideration of the durability, the peeling resistance, and the like. The thickness of the second catalyst layer 90 is 1 to 100 µm for example, and may be 5 to 100 µm.

The coat width (an average dimension in the cylinder axis direction X) of the second catalyst layer 90 is not limited in particular and may be designed as appropriate in consideration of the size of the second base material 70, the flow rate of the exhaust gas flowing in the second catalyst body 60, and the like. The coat width is for example 10% to 100%, preferably 20% to 100%, and more preferably 30% to 100% of the overall length of the base material in the cylinder axis direction X.

The second catalyst body 60 may include a layer other than the NH₃ adsorption layer 80 and the second catalyst layer 90.

The second catalyst body 60 can be manufactured in accordance with a known method. For example, a slurry for NH₃ adsorption layer formation, which contains a zeolite functioning as the NH₃ adsorber, a solvent, and optional components (for example, OSC material, catalyst precious metal source, binder, and the like) is prepared. Moreover, a slurry containing a catalyst precious metal source, an OSC material, a non-OSC material if necessary, a solvent, and other optional components is prepared. Of these slurries, the slurry for the lower layer side is applied to the second base material 70 in accordance with the known method and dried as necessary, which is then fired to form the lower layer. Subsequently, the slurry for the upper layer side is applied onto the lower layer formed on the second base material 70 in accordance with the known method and dried as necessary, which is then fired to form the upper layer. Thus, the second catalyst body 60 can be obtained.

### <First catalyst body>

The first catalyst body 20 may have a structure that is the same as or similar to that of the startup catalyst in the known exhaust gas purifying system for a gasoline engine including the startup catalyst (S/C) and the underfloor catalyst (UF/C).

One example of the first catalyst body 20 is illustrated in Fig. 6. For example, the first catalyst body 20 includes a first base material 30 and a first catalyst layer 40. The first catalyst body 20 is typically disposed at a position near an exhaust manifold and an engine compartment (closed couple (CC) position) in the exhaust path of the gasoline engine 1.

In the first embodiment, the straight-flow type base material is used for the first base material 30. However, the first base material 30 is not limited to this, and may be the wall-flow type base material. For example, the first catalyst body 20 may be configured as a catalyst coated type gasoline particulate filter (GPF) by using the wall-flow type base material as the first base material 30, which will be described in an embodiment below.

The first base material 30 may be a ceramic carrier formed of ceramic such as cordierite, aluminum titanate, or silicon carbide, or a metal carrier formed of stainless steel (SUS), a Fe-Cr-Al-based alloy, a Ni-Cr-Al-based alloy, or the like.

Although the first catalyst body 20 includes one first base material 30 in the first embodiment, the structure is not limited to this example. In another example, the first catalyst body 20 may be a tandem type catalyst body including a plurality of the first base materials 30, each of which includes the first catalyst layer 40, as will be described in an embodiment below. In the tandem type catalyst body, the plurality of first base materials 30 may be either of the same kind or different kinds. The plurality of first catalyst layers 40 may have either the same or different compositions.

The first catalyst layer 40 contains the catalyst precious metal. The catalyst precious metal contained in the first catalyst layer 40 may be similar to the catalyst precious metal contained in the second catalyst layer 90 of the second catalyst body 60. The first catalyst layer 40 usually contains the carrier that carries the catalyst precious metal. The carrier contained in the first catalyst layer 40 may be similar to the carrier contained in the second catalyst layer 90 of the second catalyst body 60. The other components contained in the first catalyst layer 40 may be similar to those of the second catalyst layer 90 of the second catalyst body 60.

The first catalyst layer 40 may have either a single layer structure or a multilayer structure. When the first catalyst layer 40 has the single layer structure, the first catalyst layer 40 may include a plurality of regions having different compositions, properties, or the like. In another example, the first catalyst layer 40 may include a front part that is positioned on an upstream side Y1 in a cylinder axis direction Y, and a rear part that is positioned on a downstream side Y2, and the compositions and/or properties may be different between the front part and the rear part. Specifically, for example, the front part and the rear part may contain different precious metals.

When the first catalyst layer 40 has the multilayer structure, the number of layers is not limited in particular. The first catalyst layer 40 may have a two-layer structure including a layer on the base material side (lower layer) and a layer on a surface side (upper layer), or may have a structure of three or more layers including the layer on the base material side (lower layer), the layer on the surface side (upper layer), and one or more intermediate layers existing therebetween. In this multilayer structure, the respective layers may contain different precious metals.

In the example illustrated in Fig. 6, the first catalyst layer 40 has the multilayer structure, and includes a lower layer part 42 on the base material side and an upper layer part 44 on the exposed surface side. Each of the lower layer part 42 and the upper layer part 44 of the first catalyst layer 40 includes the catalyst precious metal. The lower layer part 42 contains Pd as the catalyst precious metal. On the other hand, the upper layer part 44 contains Rh as the catalyst precious metal. In this case, by carrying the oxidizing catalyst and the reducing catalyst with these catalysts separated from each other in the stacking direction, the deterioration of the catalyst precious metal (for example, sintering due to grain growth) can be suppressed, so that the durability of the first catalyst body 20 can be improved further.

The first catalyst body 20 can be manufactured in accordance with the known method. For example, a slurry containing a catalyst precious metal source, an OSC material, a non-OSC material, a solvent, and optional components is prepared. This slurry is applied to the second base material 70 in accordance with the known method and dried as necessary, which is then fired to form the first catalyst layer 40. Thus, the first catalyst body 20 can be obtained.

### <<Exhaust gas purifying system 100>>

In the gasoline engine 1, the mixed gas with the air-fuel ratio from the rich region to the lean region including the theoretical air-fuel ratio is combusted. As illustrated in Fig. 1, the exhaust gas generated in the gasoline engine 1 is first purified in the first catalyst body 20 of the upstream catalyst converter 10. The first catalyst body 20 contains the catalyst precious metal of the three-way catalyst, and when NOx is purified, NH₃ is generated and the exhaust gas including NH₃ flows out of the upstream catalyst converter 10.

The exhaust gas having flowed out of the upstream catalyst converter 10 flows into the downstream catalyst converter 50. Here, if the temperature inside the downstream catalyst converter 50 is so low that the temperature does not reach catalyst active temperature, NH₃ cannot be purified. On the other hand, in the exhaust gas purifying system 100, the second catalyst body 60 includes the NH₃ adsorption layer 80. Thus, NH₃ included in the exhaust gas is adsorbed by the NH₃ adsorption layer 80 included in the second catalyst body 60 of the downstream catalyst converter 50, and the emission out of the exhaust gas purifying system 100 is suppressed. NH₃ adsorbed by the NH₃ adsorption layer 80 is purified in the second catalyst layer 90 at a timing of, for example, fuel cutting (F/C).

Here, the exhaust gas purifying system is used in the high temperature environment, and the atmosphere varies between the rich atmosphere and the lean atmosphere in the gasoline engines, unlike in diesel engines and lean-burn engines. According to the present inventors' eamest examinations, it has been found out that if the atmosphere is in the rich to stoichiometric range under high temperature, oxygen becomes deficient and the structure of the zeolite used as the NH₃ adsorber in the NH₃ adsorption layer deteriorates, so that the NH₃ purifying performance deteriorates.

Based on this finding, the second catalyst layer 90 including the OSC material is stacked on the NH₃ adsorption layer 80 in the second catalyst body 60 of the downstream catalyst converter 50 of the exhaust gas purifying system 100 according to this embodiment. Accordingly, oxygen can be released from the OSC material such that oxygen will not be deficient in the atmosphere. Here, since the second catalyst layer 90 exists in the state of being stacked on the NH₃ adsorption layer 80, the effect of relieving the atmosphere is particularly high. Therefore, it is possible to effectively suppress the structure deterioration of the zeolite due to oxygen deficiency under high temperature and drastically suppress the decrease in NH₃ purifying performance after duration.

### <<Other embodiments>>

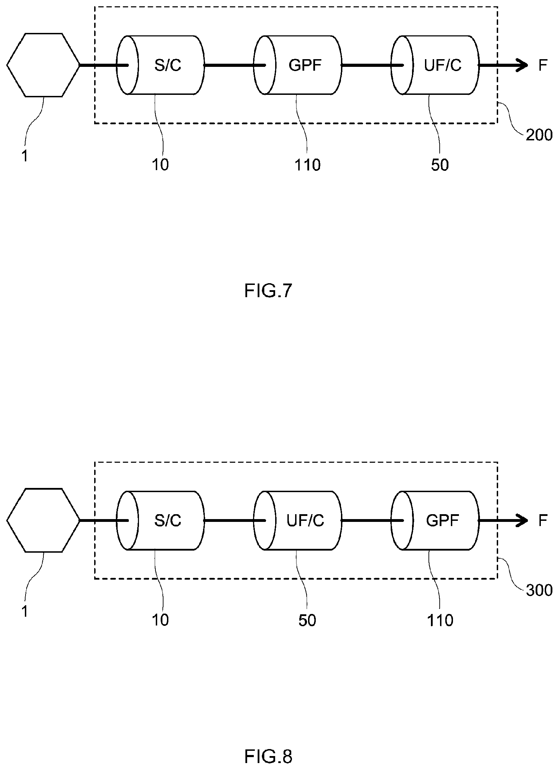

Fig. 7 to Fig. 13 illustrate other embodiments. It should be noted that in the following embodiments, the same parts as those in the first embodiment are not explained.

An exhaust gas purifying system 200 for a gasoline engine according to a second embodiment illustrated in Fig. 7 is configured to be disposed in the exhaust path of the gasoline engine 1, and the exhaust gas purifying system 200 is connected to the gasoline engine 1. The exhaust gas purifying system 200 includes the upstream catalyst converter 10, the downstream catalyst converter 50, and a gasoline particulate filter (GPF) 110. The GPF 110 is disposed on the downstream side of the upstream catalyst converter 10 and on the upstream side of the downstream catalyst converter 50 in the flowing direction F of the exhaust gas. That is to say, the exhaust gas purifying system 200 for a gasoline engine according to the second embodiment is configured as the exhaust gas purifying system 100 for a gasoline engine according to the first embodiment in which the GPF 110 is added between the upstream catalyst converter 10 and the downstream catalyst converter 50. As the GPF 110, a known GPF used for the known exhaust gas purifying system for a gasoline engine can be used.

By such a structure, particulate matter (PM) in the exhaust gas can be captured by the GPF. Accordingly, by this structure, the exhaust gas purifying system for a gasoline engine having the high NH₃ purifying performance after duration and the lower PM emission can be provided.

An exhaust gas purifying system 300 for a gasoline engine according to a third embodiment illustrated in Fig. 8 includes the gasoline particulate filter (GPF) 110 similarly to the second embodiment. The GPF 110, however, is disposed on the downstream side relative to the downstream catalyst converter 50 in the flowing direction F of the exhaust gas. That is to say, the exhaust gas purifying system 300 for a gasoline engine according to the third embodiment is configured as the exhaust gas purifying system 100 for a gasoline engine according to the first embodiment in which the GPF 110 is added on the downstream side of the downstream catalyst converter 50.

By such a structure, PM in the exhaust gas can be captured by the GPF. Accordingly, by this structure, the exhaust gas purifying system for a gasoline engine having the high NH₃ purifying performance after duration and the lower PM emission can be provided.

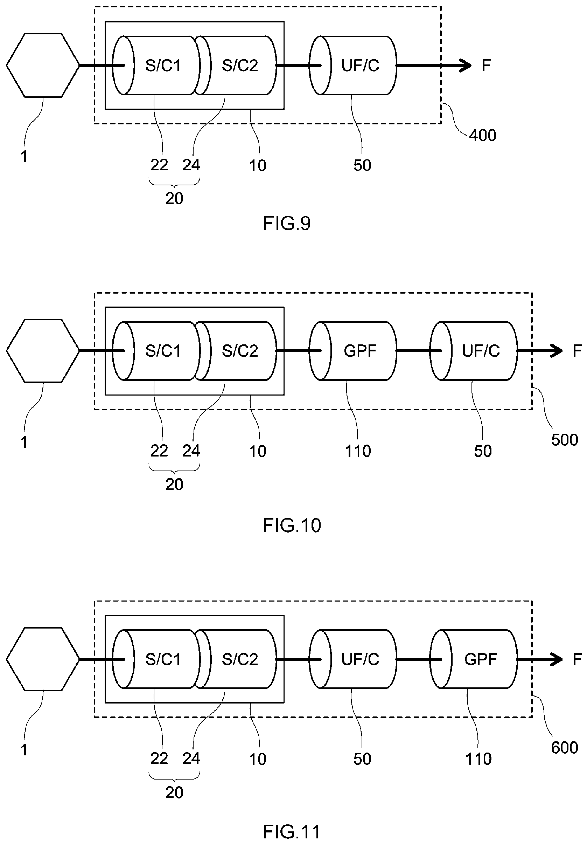

An exhaust gas purifying system 400 for a gasoline engine according to a fourth embodiment illustrated in Fig. 9 is different from the exhaust gas purifying system 100 for a gasoline engine according to the first embodiment in that the first catalyst body 20 of the upstream catalyst converter 10 is a tandem type catalyst body including an upstream side catalyst body 22 and a downstream side catalyst body 24. By such a structure, the purifying performance of the first catalyst body 20 can be increased further.

In an exhaust gas purifying system 500 for a gasoline engine according to a fifth embodiment illustrated in Fig. 10, the first catalyst body 20 of the upstream catalyst converter 10 is the tandem type catalyst body including the upstream side catalyst body 22 and the downstream side catalyst body 24 and the GPF 110 is disposed on the downstream side of the upstream catalyst converter 10 and on the upstream side of the downstream catalyst converter 50 in the flowing direction F of the exhaust gas. That is to say, the exhaust gas purifying system 500 for a gasoline engine according to the fifth embodiment is configured as the exhaust gas purifying system 400 for a gasoline engine according to the fourth embodiment in which the GPF 110 is added between the upstream catalyst converter 10 and the downstream catalyst converter 50. By such a structure, the purifying performance of the first catalyst body 20 can be increased further and in addition, PM in the exhaust gas can be captured efficiently.

In an exhaust gas purifying system 600 for a gasoline engine according to a sixth embodiment illustrated in Fig. 11, the first catalyst body 20 of the upstream catalyst converter 10 is the tandem type catalyst body including the upstream side catalyst body 22 and the downstream side catalyst body 24 and the GPF 110 is disposed on the downstream side of the downstream catalyst converter 50 in the flowing direction F of the exhaust gas. That is to say, the exhaust gas purifying system 600 for a gasoline engine according to the sixth embodiment is configured as the exhaust gas purifying system 400 for a gasoline engine according to the fourth embodiment in which the GPF 110 is added on the downstream side of the downstream catalyst converter 50. By such a structure, the purifying performance of the first catalyst body 20 can be increased further and in addition, PM in the exhaust gas can be captured efficiently.

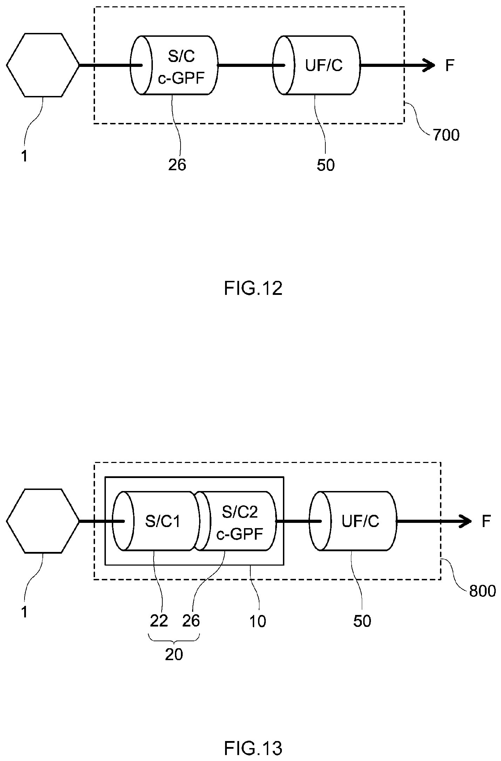

In an exhaust gas purifying system 700 for a gasoline engine according to a seventh embodiment illustrated in Fig. 12, the wall-flow type base material is used as the base material of a first catalyst body 26 of the upstream catalyst converter 10 and the base material of the first catalyst body 26 has a function of the GPF. By such a structure, PM in the exhaust gas can be captured by the GPF. Accordingly, by this structure, the exhaust gas purifying system for a gasoline engine having the high NH₃ purifying performance after duration and the lower PM emission can be provided.

In an exhaust gas purifying system 800 for a gasoline engine according to an eighth embodiment illustrated in Fig. 13, the first catalyst body 20 of the upstream catalyst converter 10 is the tandem type catalyst body including the upstream side catalyst body 22 and the downstream side catalyst body 26. The wall-flow type base material is used as the base material of the downstream side catalyst body 26 and the base material of the downstream side catalyst body 26 has the function of the GPF. By this structure, the purifying performance of the first catalyst body 20 can be increased further and in addition, PM in the exhaust gas can be captured efficiently.

### <<Application of exhaust gas purifying system 100 for gasoline engine»

The exhaust gas purifying system 100 for a gasoline engine can be used suitably for purifying the exhaust gas emitted from the gasoline engines of not only vehicles such as an automobile, a truck, and a motorcycle but also vessels and the like. Especially, the exhaust gas purifying system 100 for a gasoline engine can be used suitably for vehicles such as an automobile and a truck including a gasoline engine.

Test Examples about the present invention are hereinafter described but it is not intended to limit the present invention to Test Examples below.

### Example 1

As the first base material, a honeycomb base material (made of cordierite, diameter: 117 mm, overall length: 100 mm, and the number of cells per square inch: 600 cpsi) was prepared. A Pd-containing slurry was prepared by mixing palladium nitrate, CeO₂-ZrO₂-based composite oxide powder (OSC material), Al₂O₃ powder, barium sulfate, a binder, and ion exchange water. This Pd-containing slurry was poured into the first base material as a slurry for lower layer formation and an unnecessary part was blown away with a blower; thus, a surface of the first base material was coated with a material for lower layer formation. By firing this in an electric furnace, a lower layer containing a Pd catalyst was formed on the first base material.

A Rh-containing slurry was prepared by mixing rhodium nitrate, CeO₂-ZrO₂-based composite oxide powder (OSC material), Al₂O₃ powder, a binder, and ion exchange water. This Rh-containing slurry was poured into the first base material where the lower layer was formed, as a slurry for upper layer formation and an unnecessary part was blown away with the blower; thus, a surface of the lower layer formed on the base material was coated with a material for upper layer formation. By firing this in the electric furnace, an upper layer containing a Rh catalyst was formed on the lower layer. In this manner, the first catalyst body was manufactured.

Next, the same honeycomb base material as that of the first base material was prepared as the second base material. A zeolite-containing slurry was prepared by mixing a Cu-carrying CHA type zeolite (Cu-CHA), a binder, and ion exchange water. This zeolite-containing slurry was poured into the second base material as a slurry for lower layer formation and an unnecessary part was blown away with the blower; thus, a surface of the second base material was coated with a material for lower layer formation. By firing this in the electric furnace, a lower layer containing the zeolite was formed on the second base material.

The Pd-containing slurry, which was prepared above, was poured into the second base material where the lower layer was formed, as a slurry for intermediate layer formation and an unnecessary part was blown away with the blower; thus, a surface of the lower layer formed on the second base material was coated with a material for intermediate layer formation. By firing this in the electric furnace, an intermediate layer containing the Rh catalyst was formed on the lower layer.

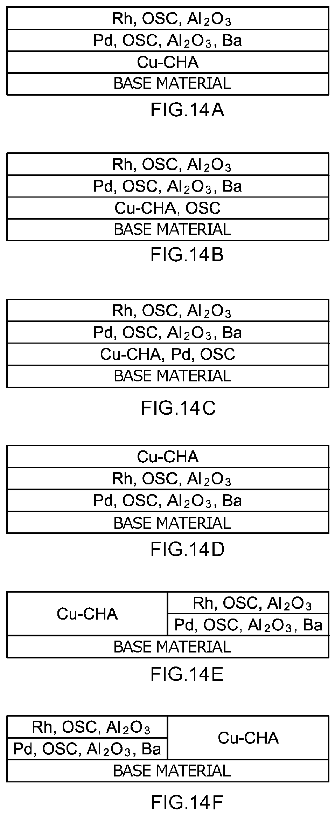

The Rh-containing slurry, which was manufactured above, was poured into the second base material where the intermediate layer was formed, as a slurry for upper layer formation and an unnecessary part was blown away with the blower; thus, a surface of the intermediate layer formed over the second base material was coated with a material for upper layer formation. By firing this in the electric furnace, an upper layer containing the Rh catalyst was formed on the intermediate layer. In this manner, the second catalyst body was manufactured. By combining the first catalyst body and the second catalyst body that were manufactured, an exhaust gas purifying system according to Example 1 was constructed. A layer structure of the second catalyst body is schematically illustrated in Fig. 14A.

### Example 2

The first catalyst body was manufactured in a manner similar to Example 1. Next, a zeolite-containing slurry was prepared by mixing a Cu-carrying CHA type zeolite, CeO₂-ZrO₂-based composite oxide powder (OSC material), a binder, and ion exchange water. The second catalyst body was manufactured in a manner similar to Example 1 except that this zeolite-containing slurry was used as a slurry for lower layer formation and the amount of the OSC material in the Pd-containing slurry and the Rh-containing slurry was reduced so that the amount of the OSC material in the entire second catalyst body became the same as that of the second catalyst body in Example 1. By combining the first catalyst body and the second catalyst body that were manufactured, an exhaust gas purifying system according to Example 2 was constructed. A layer structure of the second catalyst body is schematically illustrated in Fig. 14B.

### Example 3

The first catalyst body was manufactured in a manner similar to Example 1. Next, a zeolite-containing slurry was prepared by mixing a Cu-carrying CHA type zeolite, palladium nitrate, CeO₂-ZrO₂-based composite oxide powder (OSC material), a binder, and ion exchange water. The second catalyst body was manufactured in a manner similar to Example 1 except that this zeolite-containing slurry was used as a slurry for lower layer formation, the amount of Pd in the Pd-containing slurry was reduced so that the amount of Pd in the entire second catalyst body became the same as that of the second catalyst body in Example 1, and the amount of the OSC material in the Pd-containing slurry and the Rh-containing slurry was reduced so that the amount of the OSC material in the entire second catalyst body became the same as that of the second catalyst body in Example 1. By combining the first catalyst body and the second catalyst body that were manufactured, an exhaust gas purifying system according to Example 3 was constructed. A layer structure of the second catalyst body is schematically illustrated in Fig. 14C.

### Example 4 (not according to the invention)

The first catalyst body was manufactured in a manner similar to Example 1. The same second base material as that in Example 1 was prepared. The Pd-containing slurry, which was prepared in Example 1, was poured into the second base material as a slurry for lower layer formation and an unnecessary part was blown away with the blower; thus, the surface of the second base material was coated with a material for lower layer formation. By firing this in the electric furnace, a lower layer containing Pd was formed on the second base material.

The Rh-containing slurry, which was prepared in Example 1, was poured into the second base material where the lower layer was formed, as a slurry for intermediate layer formation and an unnecessary part was blown away with the blower; thus, a surface of the lower layer formed on the second base material was coated with a material for intermediate layer formation. By firing this in the electric furnace, an intermediate layer containing the Rh catalyst was formed on the lower layer.

The zeolite-containing slurry, which was prepared in Example 1, was poured into the second base material where the intermediate layer was formed, as a slurry for upper layer formation and an unnecessary part was blown away with the blower; thus, a surface of the intermediate layer formed over the second base material was coated with a material for upper layer formation. By firing this in the electric furnace, an upper layer containing the zeolite was formed on the intermediate layer. In this manner, the second catalyst body was manufactured. By combining the first catalyst body and the second catalyst body that were manufactured, an exhaust gas purifying system according to Example 4 was constructed. A layer structure of the second catalyst body is schematically illustrated in Fig. 14D.

### Comparative Example 1

The first catalyst body was manufactured in a manner similar to Example 1. The same second base material as that in Example 1 was prepared. The zeolite-containing slurry, which was prepared in Example 1, was poured up to a position corresponding to 50% of the overall length of the base material from the front part of the second base material and an unnecessary part was blown away with the blower; thus, a surface of the front part of the second base material was coated with a material for front part formation. By firing this in the electric furnace, a front layer containing the zeolite was formed in the front part of the base material.

The Pd-containing slurry, which was prepared in Example 1, was poured up to the position corresponding to 50% of the overall length of the base material from the rear part of the second base material and an unnecessary part was blown away with the blower; thus, a surface of the rear part of the second base material was coated with a material for rear part lower layer formation. By firing this in the electric furnace, a lower layer containing Pd was formed in the rear part of the second base material.

The Rh-containing slurry, which was prepared in Example 1, was poured up to the position corresponding to 50% of the overall length of the base material from the rear part of the second base material and an unnecessary part was blown away with the blower; thus, a surface of the lower layer of the rear part of the second base material was coated with a material for rear part upper layer formation. By firing this in the electric furnace, an upper layer containing Pd was formed on the lower layer in the rear part of the second base material. In this manner, the second catalyst body was manufactured. By combining the first catalyst body and the second catalyst body that were manufactured, an exhaust gas purifying system according to Comparative Example 1 was constructed. A layer structure of the second catalyst body is schematically illustrated in Fig. 14E. It should be noted that the amount of Pd and the amount of Rh in the base material were adjusted so as to be the same as those in Example 1.

### Comparative Example 2

The first catalyst body was manufactured in a manner similar to Example 1. The second catalyst body was manufactured by switching the front part and the rear part of the second catalyst body according to Comparative Example 1. By combining the first catalyst body and the second catalyst body that were manufactured, an exhaust gas purifying system according to Comparative Example 2 was constructed. A layer structure of the second catalyst body is schematically illustrated in Fig. 14F. It should be noted that the amount of Pd and the amount of Rh in the base material were adjusted so as to be the same as those in Example 1.

### [Durability treatment]

The exhaust gas purifying system according to each of Examples and Comparative Examples was attached to an exhaust system of a V type 8-cylinder gasoline engine. Here, the first catalyst body was disposed so as to exist on the upstream side in the flowing direction of the exhaust gas in the exhaust system. The temperature of the inflow gas was set to 950°C and the exhaust gas with each of the rich atmosphere, the stoichiometric atmosphere, and the lean atmosphere was repeatedly supplied to the exhaust gas purifying system every predetermined time for 50 hours. Thus, the first catalyst body was subjected to a durability treatment of 1000°C and the second catalyst body was subjected to the durability treatment of 700°C.

### [Measurement of NH₃ emission]

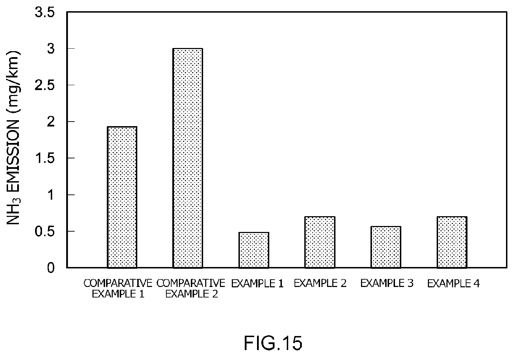

The exhaust gas purifying system according to each of Examples and Comparative Examples after the aforementioned durability treatment was mounted on a vehicle equipped with a gasoline engine. Here, the first catalyst body was accommodated in the housing and attached to the position of the startup catalyst, and the second catalyst body was accommodated in the housing and attached to the underfloor position. On the downstream side of the second catalyst body, an FT-IR spectrometer was attached. This vehicle was driven in accordance with the WLTC mode on a chassis dynamometer and the ammonium concentration contained in the exhaust gas was measured; thus, the NH₃ emission was determined. The results are shown in Fig. 15.

As indicated by the results in Fig. 15, the NH₃ emission after duration was much smaller in the exhaust gas purifying systems according to Examples 1 to 4 in which the NH₃ adsorption layer containing Cu-CHA and the catalyst layer containing the OSC material were stacked in the second catalyst body than in Comparative Examples 1 and 2 in which these layers were arranged side by side in the flowing direction of the exhaust gas. Therefore, it is understood that the exhaust gas purifying system for a gasoline engine disclosed herein has the high NH₃ purifying performance after duration.

The comparison of Example 1 to Example 3 indicates that the NH₃ emission after duration was smaller in the case where the OSC material and the catalyst precious metal were not disposed in the NH₃ adsorption layer than in the case where the OSC material and the catalyst precious metal were disposed in the NH₃ adsorption layer. Moreover, the comparison of Example 1 and Example 4 indicates that the NH₃ emission after duration was smaller in the case where the NH₃ adsorption layer was disposed below the catalyst layer.

Although the embodiments of the present invention have been described above, each of the above-described embodiments is merely one example. The present invention can be carried out in other various modes. The present invention can be carried out based on the contents disclosed in this specification and technical common sense in the field. The techniques described in the scope of claims include those in which the specific embodiments exemplified above are variously modified and changed. For example, a part of the aforementioned embodiment can be replaced by another modified aspect, and the other modified aspect can be added to the aforementioned embodiment. Additionally, the technical feature may be omitted as appropriate unless such a feature is described as an essential element.

## Claims

1. An exhaust gas purifying system (100, 200, 300, 400, 500, 600, 700, 800) for a gasoline engine (1) configured to be disposed in an exhaust path of the gasoline engine (1), the exhaust gas purifying system comprising an upstream catalyst converter (10) including a first catalyst body (20, 26) and a downstream catalyst converter (50) including a second catalyst body (60), wherein
the first catalyst body (20) contains a catalyst precious metal,
the second catalyst body (60) has a structure in which an NH₃ adsorption layer (80) and a catalyst layer (90) are stacked on a base material (70),
the NH₃ adsorption layer (80) of the second catalyst body (60) contains a zeolite as an NH₃ adsorber,
the catalyst layer (90) of the second catalyst body (60) contains a catalyst precious metal and an OSC material,
the NH₃ adsorption layer (80) is stacked on a lower layer side relative to the catalyst layer (90) in the second catalyst body (60),
the zeolite is a CHA-type zeolite carrying Cu, and
the amount of the zeolite in the NH₃ adsorption layer (80) is 80 mass% or more.

2. The exhaust gas purifying system (200) for a gasoline engine (1) according to claim 1, further comprising a gasoline particulate filter (110) between the upstream catalyst converter (10) and the downstream catalyst converter (50) in a flowing direction of exhaust gas in the exhaust path.

3. The exhaust gas purifying system (300) for a gasoline engine (1) according to claim 1 or 2, further comprising a gasoline particulate filter (110) on a downstream side relative to the downstream catalyst converter (50) in a flowing direction of exhaust gas in the exhaust path.

4. The exhaust gas purifying system (400, 500, 600, 800) for a gasoline engine (1) according to claim 1, wherein the first catalyst body (20) of the upstream catalyst converter (10) is a tandem type catalyst body including an upstream side catalyst body (22) and a downstream side catalyst body (24, 26).

5. The exhaust gas purifying system (500) for a gasoline engine (1) according to claim 4, further comprising a gasoline particulate filter (110) between the upstream catalyst converter (10) and the downstream catalyst converter (50) in a flowing direction of exhaust gas in the exhaust path.

6. The exhaust gas purifying system (600) for a gasoline engine (1) according to claim 4, further comprising a gasoline particulate filter (110) on a downstream side relative to the downstream catalyst converter (50) in a flowing direction of exhaust gas in the exhaust path.

7. The exhaust gas purifying system (800) for a gasoline engine (1) according to claim 4, wherein the downstream side catalyst body (26) of the first catalyst body (20) has a function as a gasoline particulate filter.

8. The exhaust gas purifying system (700) for a gasoline engine (1) according to claim 1, wherein the first catalyst body (26) of the upstream catalyst converter (10) has a function as a gasoline particulate filter.

## Patentansprüche

1. Abgasreinigungssystem (100, 200, 300, 400, 500, 600, 700, 800) für einen Benzinmotor (1), das dazu ausgebildet ist, in einem Abgasweg des Benzinmotors (1) angeordnet zu werden, und das einen vorgelagerten Katalysator (10) mit einem ersten Katalysatorkörper (20, 26) und einen nachgelagerten Katalysator (50) mit einem zweiten Katalysatorkörper (60) aufweist, bei dem
der erste Katalysatorkörper (20) ein Katalysatoredelmetall enthält,
der zweite Katalysatorkörper (60) eine Struktur aufweist, in der eine NH₃-Adsorptionsschicht (80) und eine Katalysatorschicht (90) auf einem Basismaterial (70) geschichtet sind,
die NH₃-Adsorptionsschicht (80) des zweiten Katalysatorkörpers (60) einen Zeolith als einen NH₃-Adsorber enthält,
die Katalysatorschicht (90) des zweiten Katalysatorkörpers (60) ein Katalysatoredelmetall und ein OSC-Material enthält,
die NH₃-Adsorptionsschicht (80) in dem zweiten Katalysatorkörper (60) auf einer Unterschichtseite relativ zu der Katalysatorschicht (90) geschichtet ist,
der Zeolith ein CHA-Zeolith ist, der Cu trägt, und
die Menge des Zeoliths in der NH₃-Adsorptionsschicht (80) 80 Masseprozent oder mehr beträgt.

2. Abgasreinigungssystem (200) für einen Benzinmotor (1) nach Anspruch 1, ferner mit einem Benzinpartikelfilter (110) zwischen dem vorgelagerten Katalysator (10) und dem nachgelagerten Katalysator (50) in einer Strömungsrichtung von Abgas in dem Abgasweg.

3. Abgasreinigungssystem (300) für einen Benzinmotor (1) nach Anspruch 1 oder 2, ferner mit einem Benzinpartikelfilter (110) auf einer nachgelagerten Seite relativ zu dem nachgelagerten Katalysator (50) in einer Strömungsrichtung von Abgas in dem Abgasweg.

4. Abgasreinigungssystem (400, 500, 600, 800) für einen Benzinmotor (1) nach Anspruch 1, bei dem der erste Katalysatorkörper (20) des vorgelagerten Katalysators (10) ein Tandemkatalysatorkörper mit einem vorgelagerten Katalysatorkörper (22) und einem nachgelagerten Katalysatorkörper (24, 26) ist.

5. Abgasreinigungssystem (500) für einen Benzinmotor (1) nach Anspruch 4, ferner mit einem Benzinpartikelfilter (110) zwischen dem vorgelagerten Katalysator (10) und dem nachgelagerten Katalysator (50) in einer Strömungsrichtung von Abgas in dem Abgasweg.

6. Abgasreinigungssystem (600) für einen Benzinmotor (1) nach Anspruch 4, ferner mit einem Benzinpartikelfilter (110) auf einer nachgelagerten Seite relativ zu dem nachgelagerten Katalysator (50) in einer Strömungsrichtung von Abgas in dem Abgasweg.

7. Abgasreinigungssystem (800) für einen Benzinmotor (1) nach Anspruch 4, bei dem der nachgelagerte Katalysatorkörper (26) des ersten Katalysatorkörpers (20) eine Funktion als ein Benzinpartikelfilter aufweist.

8. Abgasreinigungssystem (700) für einen Benzinmotor (1) nach Anspruch 1, bei dem der erste Katalysatorkörper (26) des vorgelagerten Katalysators (10) eine Funktion als ein Benzinpartikelfilter aufweist.

## Revendications

1. Système de purification de gaz d'échappement (100, 200, 300, 400, 500, 600, 700, 800) pour un moteur à essence (1) configuré pour être disposé dans un trajet d'échappement du moteur à essence (1), le système de purification de gaz d'échappement comprenant un convertisseur catalytique amont (10) comprenant un premier corps catalytique (20, 26) et un convertisseur catalytique aval (50) comprenant un deuxième corps catalytique (60), dans lequel
le premier corps catalytique (20) contient un métal précieux catalyseur,
le deuxième corps catalytique (60) a une structure dans laquelle une couche d'adsorption de NH₃ (80) et une couche de catalyseur (90) sont empilées sur un matériau de base (70),
la couche d'adsorption de NH₃ (80) du deuxième corps catalytique (60) contient une zéolite comme adsorbant de NH₃,
la couche de catalyseur (90) du deuxième corps catalytique (60) contient un métal précieux catalytique et un matériau OSC,
la couche d'adsorption de NH₃ (80) est empilée sur un côté de couche inférieur par rapport à la couche de catalyseur (90) dans le deuxième corps catalytique (60),
la zéolite est une zéolite de type CHA contenant du Cu, et
la quantité de zéolite dans la couche d'adsorption de NH₃ (80) est de 80 % en masse ou plus.

2. Système de purification de gaz d'échappement (200) pour un moteur à essence (1) selon la revendication 1, comprenant en outre un filtre à particules d'essence (110) entre le convertisseur catalytique amont (10) et le convertisseur catalytique aval (50) dans le sens d'écoulement des gaz d'échappement dans le trajet d'échappement.

3. Système de purification de gaz d'échappement (300) pour un moteur à essence (1) selon la revendication 1 ou 2, comprenant en outre un filtre à particules d'essence (110) situé en aval du convertisseur catalytique aval (50) dans le sens d'écoulement de gaz d'échappement dans le trajet d'échappement.

4. Système de purification de gaz d'échappement (400, 500, 600, 800) pour un moteur à essence (1) selon la revendication 1, dans lequel le premier corps catalytique (20) du convertisseur catalytique amont (10) est un corps catalytique de type tandem comprenant un corps catalytique côté amont (22) et un corps catalytique côté aval (24, 26).

5. Système de purification de gaz d'échappement (500) pour un moteur à essence (1) selon la revendication 4, comprenant en outre un filtre à particules d'essence (110) entre le convertisseur catalytique amont (10) et le convertisseur catalytique aval (50) dans le sens d'écoulement de gaz d'échappement dans le trajet d'échappement.

6. Système de purification de gaz d'échappement (600) pour un moteur à essence (1) selon la revendication 4, comprenant en outre un filtre à particules d'essence (110) sur un côté aval par rapport au convertisseur catalytique aval (50) dans le sens d'écoulement de gaz d'échappement dans le trajet d'échappement.

7. Système de purification de gaz d'échappement (800) pour un moteur à essence (1) selon la revendication 4, dans lequel le corps catalytique côté aval (26) du premier corps catalytique (20) a une fonction de filtre à particules d'essence.

8. Système de purification de gaz d'échappement (700) pour un moteur à essence (1) selon la revendication 1, dans lequel le premier corps catalytique (26) du convertisseur catalytique amont (10) a une fonction de filtre à particules d'essence.
